# FASCICULE DE BREVET EUROPEEN

(11) **EP 1 401 903 B1**
(45) Date de publication et mention de la délivrance du brevet: **13.08.2008**
(21) Numéro de dépôt: 02704847.9
(22) Date de dépôt: 15.02.2002
(51) Int. Cl.: C08F 293/00, C08L 53/00, B01F 17/00

(54) **COPOLYMERES A BLOCS HYDROSOLUBLES COMPRENANT UN BLOC HYDROPHOBE ET UN BLOC HYDROPHILE**
WASSERLÖSLICHE BLOCKCOPOLYMERE MIT EINEM HYDROPHILEN BLOCK UND EINEM HYDROPHOBEN BLOCK
COPOLYMERS WITH WATER-SOLUBLE BLOCKS COMPRISING A HYDROPHOBIC BLOCK AND A HYDROPHILIC BLOCK

(30) Priorité: 26.02.2001 US 793169
(43) Date de publication de la demande: 31.03.2004
(73) Titulaire: RHODIA CHIMIE, 92512 Boulogne Billancourt Cedex (FR)
(72) Inventeur: ANTHONY, Olivier, F-95880 ENGHIEN LES BAINS (FR); BONNET-GONNET, Cécile, F-75011 PARIS (FR); DESTARAC, Mathias, F-75005 PARIS (FR); FARHOOSH, Roya, F-75017 PARIS (FR); JOANICOT, Mathieu, LAWRENCEVILLE, NJ 08648 (US); LIZARRAGA, Gilda, CRANBURY, NJ (US); REEB, Roland, F-77410 GRESSY (FR); SCHWOB, Jean-Marie, F-78590 NOISI LE ROI (FR)
(74) Mandataire: Delenne, Marc
(86) Numéro de dépôt international: PCT/FR2002/000591
(87) Numéro de publication internationale: WO 2002/068486

(56) Documents cités:
- EP-A- 0 887 362
- WO-A-96/15157
- DE-A- 19 704 714
- DE-A- 19 909 803
- US-A- 3 900 338
- US-A- 5 512 636
- US-A- 5 851 590

## Description

La présente invention concerne de nouveaux polymères à blocs hydrosolubles comprenant un bloc hydrophobe et un bloc hydrophile, dont la solubilité et les propriétés d'autoassociation lorsqu'ils sont dilués dans l'eau sont modulables.

De nombreuses études ont été menées sur les polymères à blocs amphiphiles. Ces études impliquent généralement les milieux solvants organiques, plus rarement les milieux aqueux. En effet, dans les polymères à blocs amphiphiles étudiés à ce jour, l'hydrophobicité forte du bloc hydrophobe entraine le plus souvent des phénomènes d'aggregation ou de micellisation irreversibles et hors d'équilibre, lorsqu'on travaille dans l'eau. Le contrôle des mécanismes et des structures se fait alors par un passage en milieu solvant. Les seuls polymères à blocs amphiphiles, dont les structures ont été étudiés à l'équilibre, sont des polymères présentant un bloc hydrophobe et un bloc neutre soluble dans l'eau, par exemple les diblocs polyéthylène (PEE)/polyoxyde d'éthylène (POE), polyoxyde de propylène/ polyoxyde d'éthylène.

Quelques études ont été menées sur des polymères à blocs amphiphiles présentant un bloc hydrophobe et un bloc hydrophile anionique. II a été montré que lorsque ces polymères sont solubles dans l'eau, ils restent sous forme de micelles sphériques ("star like" micelles). De plus, ces polymères ne sont solubles que quand le bloc hydrophile anionique est très grand en poids comparativement au bloc hydrophobe, ce qui limite fortement le nombre de polymères utilisables. Enfin, ils ne sont pas véritablement solubles puisqu'il a été montré que leur concentration micellaire critique est extrèmement faible. Du fait de la presence de micelles a tres faibles concentrations, les systémes obtenus, lorsqu'on dissout ces copolymères dans l'eau, sont en fait des suspensions dont la viscosité augmente fortement avec la concentration. Au dessus d'une concentration critique de l'ordre de 1% en poids, elles deviennent des gels difficiles à manipuler.

Sans vouloir limiter l'invention à une théorie scientifique, un but de la présente invention est de proposer des copolymères solubles, c'est à dire des copolymères dont chaque macromolécule a la propriété d'être individuellement soluble sans apparition d'aggrégation ou de micellisation.

Un autre but de la présente invention est de proposer des copolymères hydrosolubles de structure hydrophobe/hydrophile.

Un autre but est de proposer des copolymères dont la solubilité et les propriétés d'autoassociation sont modulables.

Un autre but est de pouvoir obtenir une solution aqueuse de ces copolymeres, liquide et transparente sur une large gamme de concentration.

Ces buts et d'autres sont atteints par la présente invention qui concerne en effet un copolymère à blocs comprenant au moins un bloc de nature hydrophobe et au moins un bloc de nature hydrophile, le bloc de nature hydrophobe présentant des motifs hydrophiles dans une quantité comprise entre 33 et 99 %, de préférence entre 33 et 80 %, par rapport au poids total des motifs du bloc hydrophobe.

Selon l'invention, ces copolymères sont de préférence préparés par un procédé de polymérisation dite vivante ou contrôlée.

L'invention concerne également un procédé de contrôle de la balance hydrophile/hydrophobe de copolymères à blocs amphiphiles présentant au moins un bloc issu de la polymérisation de monomères hydrophiles et au moins un bloc issu de la polymérisation de monomères hydrophobes, dans lequel on introduit :
- des motifs hydrophiles dans le bloc issu de la polymérisation de monomères hydrophobes, et/ou
- des motifs hydrophobes dans le bloc issu de la polymérisation de monomères hydrophiles.

Enfin, l'invention concerne l'utilisation de ces copolymères à blocs notamment en tant que primaires d'adhérence dans les peintures ou comme agents mouillants.

Dans la description qui suit, on entend par bloc de nature hydrophobe, un bloc polymère hydrophobe présentant des motifs hydrophiles dans une quantité comprise entre 33 et 99 %, de préférence entre 33 et 80 %, par rapport au poids total des motifs dudit bloc de nature hydrophobe. Par motif, on entend la partie du bloc correspondant à une unité monomère.

De même, on entend par bloc de nature hydrophile, un bloc polymère comprenant uniquement des motifs hydrophiles ou présentant au plus 20 %, ou de 1 à 20% en poids de motifs hydrophobes par rapport au poids total des motifs dudit bloc de nature hydrophile. Le bloc de nature hydrophile est soluble dans l'eau.

Les propriétés des copolymères selon la présente invention peuvent être obtenues par le choix de la nature des blocs hydrophobes et de la nature des blocs hydrophiles, au moins les blocs hydrophobes devant comprendre des motifs hydrophiles suivant une quantité précise.

Selon une première variante, les blocs de nature hydrophobe et les blocs de nature hydrophile peuvent être issus de la copolymérisation de monomères hydrophobes et hydrophiles. Les quantités de motifs hydrophiles et hydrophobes dans chacun desdits blocs sont alors contrôlées par les teneurs respective en monomères hydrophiles et en monomères hydrophobes lors de la polymérisation des blocs.

Ainsi, les blocs de nature hydrophobe peuvent être issus de la copolymérisation de monomères hydrophobes et de monomères hydrophiles, les monomères hydrophiles étant présents dans une quantité comprise entre 33 et 99% en poids, de préférence entre 33 et 80 % en poids par rapport au poids total des motifs du bloc hydrophobe.

Et les blocs de nature hydrophile peuvent être issus de la copolymérisation de monomères hydrophiles et eventuellement de monomères hydrophobes, les monomères hydrophobes étant présents dans une quantité inférieure à 20 % en poids, de préférence d'au moins 1 % en poids, encore plus préférentiellement comprise entre 1 et 20 %, par rapport au poids total des motifs du bloc hydrophile.

Selon une deuxième variante, les blocs de nature hydrophobe et les blocs de nature hydrophile des copolymères précédents peuvent être issus:
- de la polymérisation de monomères pouvant être rendus hydrophiles par hydrolyse et éventuellement de monomères hydrophobes non hydrolysables et/ou de monomères hydrophiles,
- puis, de l'hydrolyse du polymère obtenu.

Au cours de l'hydrolyse, les motifs correspondant aux monomères hydrolysables sont hydrolysés en motifs hydrophiles.

Les quantités de motifs hydrophiles et hydrophobes dans chacun desdits blocs sont alors contrôlées par la quantité de chaque type de monomères et par le taux d'hydrolyse.

Selon cette deuxième variante, diverses mises en oeuvre peuvent être envisagées.

Selon une première mise en oeuvre, les blocs peuvent être obtenus par:
- homopolymérisation de monomères hydrophobes pouvant être rendus hydrophiles par hydrolyse, et
- hydrolyse partielle de l'homopolymère obtenu à un taux tel que l'on obtienne:

- soit, dans le cas des blocs de nature hydrophobe, une quantité de motifs hydrophiles comprise entre 33 et 99 %, de préférence entre 33 et 75%, par rapport au poids total des motifs du bloc hydrophobe,
- soit, dans le cas des blocs de nature hydrophile, une quantité de motifs hydrophobes inférieure à 20 % en poids, de préférence d'au moins 1 % en poids, encore plus préférentiellement comprise entre 1 et 20 %, par rapport au poids total des motifs du bloc hydrophile.

Selon une deuxième mise en oeuvre, les blocs peuvent être obtenus par:
- copolymérisation de monomères hydrophobes pouvant être rendus hydrophiles par hydrolyse et de monomères hydrophobes ne pouvant pas être rendus hydrophiles par hydrolyse, puis
- hydrolyse totale ou partielle du polymère obtenu.

Selon cette deuxième mise en oeuvre, la quantité de motifs hydrophiles et hydrophobes peut dépendre de deux critères: les teneurs des différents types de monomères et le taux d'hydrolyse.

Si l'hydrolyse est partielle, on peut jouer à la fois sur la teneur en monomères et le taux d'hydrolyse.

Selon une troisième mise en oeuvre, les blocs peuvent être obtenus par:
- copolymérisation de monomères hydrophobes pouvant être rendus hydrophiles par hydrolyse et de monomères hydrophiles, puis
- hydrolyse partielle du polymère obtenu à un taux tel que l'on obtienne:
   - soit, dans le cas des blocs de nature hydrophobe, une quantité de motifs hydrophiles comprise entre 33 et 99 %, de préférence entre 33 et 80 %, par rapport au poids total des motifs constituant le groupe de nature hydrophobe,
   - soit, dans le cas des blocs de nature hydrophile, une quantité de motifs hydrophobes inférieure à 20 % en poids, de préférence d'au moins 1 % en poids, encore plus préférentiellement comprise entre 1 et 20 %, par rapport au poids total des motifs constituant le groupe de nature hydrophile.

En général, les monomères hydrophobes peuvent être choisis parmi:
- les monomères vinylaromatiques tel que le styrène,
- les diéniques tels que le butadiène,
- les acrylates et méthacrylates d'alkyle dont le groupe alkyle contient de 1 à 10 atomes de carbone tels que les acrylates et méthacrylates de méthyle, éthyle, n-butyle, 2-éthylhexyle, t-butyle, isobornyle, phényle, benzyle.

De préférence, il s'agit du styrène.

Les monomères hydrophiles peuvent être choisis parmi:
- les acides carboxyliques à insaturation éthylénique tels que les acides acrylique et méthacrylique,
- les monomères hydrophiles neutres tels que l'acrylamide et ses dérivés (N-méthylacrylamide, N-isopropylacrylamide), et le méthacrylamide. A titre d'exemples on peut aussi citer les macromonmères de type (méth)acrylate de polyéthylène glycol, (méth)acrylate d'alcool polyvinylique, (méth)acrylate de poly(hydroxy (C₁-C₄)-alkyl(méth)acrylate), (méth)acrylate de poly(N-méthylol acrylamide), et (méth)acrylate de poly((méth)acrylamide). Ces macromonomères peuvent être obtenus par exemple par transestérification de l'acrylate ou du méthacrylate de méthyle, ou de l'anhydride (méth)acrylique ou du chlorure d'acryloyle ou de méth acryloyle. Ils peuvent aussi être obtenus par estérification directe de l'acide acrylique ou méthacrylique. Certains monomères peuvent être obtenus par télomérisation comme ceux du type (méth)acrylate de poly((méth)acrylamide.
- les monomères hydrophiles anioniques: le 2-acrylamido-2-méthyl-propane sulfonate de sodium (AMPS), le styrène sulfonate de sodium, le vinylsulfonate de sodium.

Les monomères pouvant être rendus hydrophiles par hydrolyse peuvent être choisis parmi:
- les esters acryliques et méthacryliques hydrolysables en acide tels que l'acrylate de méthyle, l'acrylate d'éthyle, l'hydroxyéthyle méthacrylate, l'hydroxyéthyle acrylate, le tertiobutyle acrylate,
- l'acétate de vinyle hydrolysable en unités alcool vinylique,
- le méthacrylate et l'acrylate de 2-dimethylaminoéthyle quaternisé (madamquat et adamquat),
- l'acrylamide et le (méth)acrylamide.

De préférence, les copolymères à blocs selon l'invention sont des copolymères diblocs. Toutefois, il peut également s'agir de copolymères triblocs, voire multiblocs.

Selon le mode préféré de l'invention, le copolymère est un copolymère dibloc comprenant un bloc de nature hydrophile et un bloc de nature hydrophobe, dans lequel:
- le bloc de nature hydrophile comprend des motifs acide acrylique (AA) et des motifs acrylate d'éthyle (AEt),
- et le bloc de nature hydrophobe comprend des motifs de styrène (St) et d'acide méthacrylique (AMA) et/ou d'hydroxyéthyl méthacrylate (HEMA).

De préférence, selon ce mode de réalisation, le bloc de nature hydrophile est issu:
- de la polymérisation d'acide acrylique (AA) et d'acrylate d'éthyle (AEth) dans un rapport en poids AEt/AA de 10/90,
- puis de l'hydrolyse du polymère obtenu à un taux d'au moins 33 % en mole.

De préférence, le bloc de nature hydrophobe est, lui, issu de la polymérisation d'un mélange de monomères comprenant au moins 33 % en poids de styrène.

Généralement, les polymères à blocs selon l'invention présentent une masse moléculaire d'au plus 100 000 g/mol, de préférence d'au moins 1000 g/mol.

D'une manière générale, les copolymères à blocs précédents peuvent être obtenus par tout procédé de polymérisation dite vivante ou contrôlée tel que, par exemple:
- la polymérisation radicalaire contrôlée par les xanthates selon l'enseignement de la demande WO 98/58974,
- la polymérisation radicalaire contrôlée par les dithioesters selon l'enseignement de la demande WO 97/01478
- la polymérisation à l'aide de précurseurs nitroxydes selon l'enseignement de la demande WO 99/03894,
- la polymérisation radicalaire contrôlée par les dithiocarbamates selon l'enseignement de la demande WO 99/31144,
- la polymérisation radicalaire par transfert d'atome (ATRP) selon l'enseignement de la demande WO 96/30421,
- la polymérisation radicalaire contrôlée par les iniferters selon l'enseignement de Otu et al., Makromol. Chem. Rapid. Commun., 3,127 (1982),
- la polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- la polymérisation par transfert de groupe selon l'enseignement de Webster O.W. "Group Transfer Polymerization", p. 580-588 de l'"Encyclopedia of Polymer Science and Engineering", vol.7 et H.F. Mark, N.M. Bikales, C.G. Overberger and G. Menges, Eds., Wiley Interscience, New York, 1987,
- la polymérisation radicalaire contrôlée par les dérivés du tetraphényléthane (D. Braun et al. Macromol.Symp. 111,63 (1996)),
- la polymérisation radicalaire contrôlée par les complexes organocobalt (Wayland et al. J.Am.Chem.Soc. 116,7973 (1994)).

La polymérisation préférée est la polymérisation radicalaire vivante à l'aide de xanthates.

L'invention concerne donc en outre un procédé de préparation de ces polymères à blocs. Ce procédé consiste à:
1- mettre en contact:
   - au moins un monomère éthyléniquement insaturé,
   - au moins une source de radicaux libres, et
   - au moins un composé de formule (I): 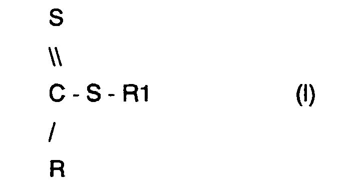
   dans laquelle:
   - R représente un groupe R2O-, R2R'2N- ou R3- avec :
      R2 et R'2, identiques ou différents, représentant un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
      R3 représentant H, Cl, un groupe alkyle, aryle, alcène ou alcyne, un (hétéro)cycle saturé ou non, éventuellement substitués, un groupe alkylthio, alkoxycarbonyle, aryloxycarbonyle, carboxy, acyloxy, carbamoyles, cyano, dialkyl- ou diaryl-phosphonato, dialkyl- ou diaryl-phosphinato, une chaîne polymère,
      . R1 représente un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, ou une chaîne polymère,
2- répéter au moins une fois la mise en contact précédente en utilisant:
   - des monomères différents de la mise en oeuvre précédente, et
   - à la place du composé précurseur de formule (I), le polymère issu de la mise en oeuvre précédente,
3- éventuellement, hydrolyser le copolymère obtenu.
   Les groupes R1, R2, R'2 et R3 peuvent être substitués par des groupes alkyles, phényles substitués, des groupes aromatiques substitués ou des groupes: oxo, alkoxycarbonyle ou aryloxycarbonyle (-COOR), carboxy (-COOH), acyloxy (-O2CR), carbamoyle (-CONR2), cyano (-CN), alkylcarbonyle, alkylarylcarbonyle, arylcarbonyle, arylalkylcarbonyle, isocyanato, phtalimido, maleïmido, succinimido, amidino, guanidino, hydroxy (-OH), amino (-NR2), halogène, allyle, époxy, alkoxy (-OR), S-alkyle, S-aryle, silyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R représentant un groupe alkyle ou aryle.

De préférence, le composé de formule (I) est un dithiocarbonate choisi parmi les composés de formules (IA), (IB) et (IC) suivantes: 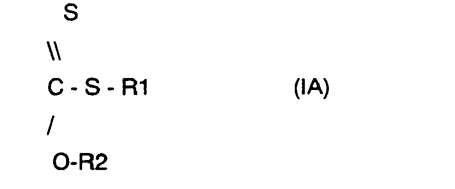 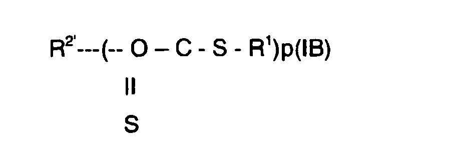 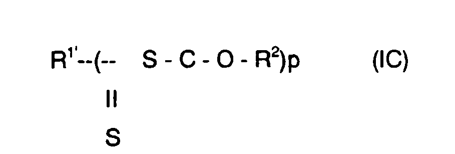 dans lesquelles:
- R2 et R2' représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
- R1 et R1' représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
- p est compris entre 2 et 10.

Au cours de l'étape 1, un premier bloc du polymère est synthétisé de nature hydrophile ou hydrophobe selon la nature et la quantité des monomères utilisés. Au cours de l'étape 2, l'autre bloc du polymère est synthétisé.

Les monomères éthyléniquement insaturés seront choisis parmi les monomères hydrophiles, hydrophobes et hydrolysables précédemment définis dans les proportions adaptées pour obtenir un copolymère à blocs dont les blocs présentent les caractéristiques de l'invention. Selon ce procédé, si toutes les polymérisations successives sont réalisées dans le même réacteur, il est généralement préférable que tous les monomères utilisés lors d'une étape aient été consommés avant que la polymérisation de l'étape suivante ne commence, donc avant que les nouveaux monomères ne soient introduits. Toutefois, il peut arriver que les monomères hydrophobes ou hydrophiles de l'étape précédente soient encore présents dans le réacteur lors de la polymérisation du bloc suivant. Dans ce cas, ces monomères ne représentent généralement pas plus de 5 % en mole de tous les monomères et ils participent à la polymérisation suivante en contribuant à introduire des motifs hydrophobes ou hydrophiles dans le bloc suivant.

Pour plus de détails quant au procédé de polymérisation précédent, on peut se reporter au contenu brevet US 6,153,705 cité comme référence dans la présente description.

L'hydrolyse peut être réalisée à l'aide d'une base ou d'un acide. La base peut être choisie parmi les hydroxydes de métaux alcalins ou alcalino-terreux, tels que la soude ou la potasse, les alcoolates de métaux alcalins tels que le méthylate de sodium, l'éthylate de sodium, le méthylate de potassium, l'éthylate de potassium, le t-butylate de potassium, l'ammoniac et les amines telles que la triéthylamine. Les acides peuvent être choisis parmi l'acide sulfurique, l'acide chlorhydrique, l'acide paratoluènesulfonique. On peut également utiliser une résine échangeuse d'ions ou une membrane échangeuse d'ions de type cationique ou anionique. L'hydrolyse est généralement réalisée à une température comprise entre 5 et 100°C, de préférence entre 15 et 90°C.

Après hydrolyse, le copolymère à blocs peut être lavé, par exemple par dialyse contre de l'eau ou à l'aide de solvant comme l'alcool. Il peut également être précipité en abaissant le pH en dessous de 3,5.

L'hydrolyse peut être réalisée sur un polymère monobloc, qui sera ensuite associé à d'autres blocs, ou sur le polymère à blocs final.

Enfin, l'invention concerne l'utilisation des copolymères à blocs précédents en tant que promoteurs d'adhèrence. Ils sont également utilisables comme agents mouillants ou agents d'hydrophylisation pour l'enduction de surfaces plus ou moins hydrophobes avec effet rémanant après rinçage. De préférence, les polymères peuvent être utilisés dans une quantité généralement comprise entre 0,1 % et 10% en poids par rapport au milieu aqueux. Les copolymères à blocs selon l'invention présentent notamment l'avantage d'améliorer l'adhèsion des peintures sur des substrats hydrophobes tels que des substrats en matière plastiques et d'augmenter l'adhèrence de fibres et de supports plastiques avec des composés issus de dispersions aqueuses (ciment, mastics). Dans cette application particulière commme agent d'adhérence, il est recommandé d'utiliser de 0,1 à 10%, de préférence de 0,5 à 5% en poids de copolymère par rapport au poids total de la peinture. Dans l'application en tant qu'agent mouillant en solution aqueuse, il est recommandé d'utiliser une quantité de 0.01 à 3 %, de préférence de 0.1 à 1% en poids de copolymère par rapport au poids total de ladite solution.

Les exemples suivants illustrent l'invention sans toutefois en limiter la portée.

Dans les exemples qui suivent:
- Mn représente la masse moléculaire moyenne en nombre Mn des polymères, Mn est exprimée en équivalents polystyrène (g/mol),
- Mw représente la masse moléculaire moyenne en poids (g/mol),
- Mw/Mn représente l'indice de polydispersité,
- les polymères, avant hydrolyse, sont analysés par chromatographie (GPC) avec le THF comme solvant d'élution.

### I) Solubilité d'un copolymère dibloc poly(styrene/acide acrylique)-b-polyacide acrylique dans l'eau:

On étudie la solubilité de quatre copolymères diblocs ci-dessous d'un poids moléculaire total de 16 000 g/mol avec un premier bloc copolymère statistique de styrène (Sty), acide acrylique (AA) et acide methacrylique (MAA) d'un poids moléculaire Mn de 1000-2000 et un second bloc copolymère statistique d'acide acrylique (AA) et d'acide methacrylique (MAA) avec Mn = 15,000 - 14,000. Ces copolymeres sont préparés en suivant le mode opératoire ci-après tout en choisissant les quantités de monomères comme indiquées dans le tableau 1 ci-dessous:

**Tableau 1**

| Copolymères diblocs: | | % en poidsd'acide |
|---|---|---|
| | | acrylique dans le 1 er bloc |
| {[Sty]₉ [MA]_{0,2}} -b- {[AA]₁₉₈[MAA]₁₂} | (1) | 0% |
| exemple comparatif | | |
| {[Sty]₁₄ [MA]_{0,5}[AA]₅} -b- {[AA]₁₈₅[MAA]₁₁} | (2) | 23% |
| exemple comparatif | | |
| {[Sty]₁₀ [MA]_{0.5}[AA]₁₀} -b- {[AA]₁₈₅[MAA]₁₁} | (3) | 48% |
| {[Sty]₅ [MA]_{0.5}[AA]₁₅} -b- {[AA]₁₈₅[MAA]₁₁} | (4) | 73% |
| {[Sty]₇ [MA]₄ [AA]₂₁₂} | (5) | n/a |
| exemple comparatif | | |

Ces copolymères sont également comparés au copolymère statistique poly(styrene/acrylic acid) (5) tel que défini ci-dessus avec un Mn de 16.000 et un rapport massique St/AA/MA = 4,6/93/2,4. Les deux techniques de diffusion de la lumière et de spectrofluorométrie sont utilisèes pour étudier les propriétés de ces copolymères en solutions aqueuses.

### I-A) Synthèse et hydrolyse du copolymère comparatif (1):

### I-A.1) Synthèse du dibloc (1):

### Synthèse d'un copolymère statistique de styrène et d'acide méthacrylique. Rapports massiques: St/AMA = 98/2.

La polymérisation est réalisée en émulsion, dans un réacteur double enveloppe muni d'une agitation tri-pâle en inox. En pied de cuve, on introduit, à température ambiante, 488,8 g d'eau, 10,13 g de sulfate de dodécyle, sel du sodium (Aldrich), 0,11 g de carbonate de sodium Na₂CO₃. Le mélange obtenu est agité pendant 30 minutes (190 tr/min) sous azote. L'agitation continue pour une durée supplementaire de 55 minutes pendant laquelle la température est élevée à 75°C, puis on incorpore un mélange comprenant 3,03 g de styrène, et 6,4 g de alpha-(o-éthylxanthyl) propionate de méthyle (CH₃CHCO₂Me)SCSOEt et 0,061 g d'acide méthacrylique. La température est ensuite élevée à 85°C et on ajoute 1,40g de persulfate d'ammonium (NH₄)₂S₂O₈.

Après cinq minutes, on continue à ajouter 27,22 g de styrène et 0,55 g d'acide méthacrylique pendant une heure. Apres l'addition complète, on obtient un polymère en émulsion (latex), qui est maintenu à 85°C pendant une heure.

On prélève 53,77 g du copolymère en émulsion précédemment obtenu (premier bloc). A l'émulsion restante, on additionne à 85°C 0,64 g de persulfate d'ammonium (NH₄)₂S₂O₈ et 5,5 g d'eau. Apres cinq minutes, on commence l'addition d'un mélange composé de:
- 567,9 g d'acrylate d'éthyle (AEt),
- 11,59 g d'acide méthacrylique (AMA),
Et simultanément un autre composé de:
- 445,9 g d'eau
- 0,65 g de Na₂CO₃

L'addition dure 1 heure. Le système est maintenu à cette température pendant trois heures supplémentaires.

### I-A.2) Hydrolyse:

Le copolymère dibloc (1) ainsi obtenu est ensuite hydrolysé. La réaction est effectuée dans un réacteur double enveloppe muni d'une agitation tri-pâle en inox. On y introduit:
- 50 g du copolymère précédent (l'extrait sec à 41,37 %),
- 265 g d'eau (pour ajuster l'extrait sec à 4 %).

La température est portée à 85°C et cependant l'émulsion est agitée vigoureusement. Ensuite on y ajoute 194 g de soude 2N (correspondant à deux équivalents molaires de soude par rapport à l'acrylate d'éthyle) pendant deux heures. Après addition complète de la soude, la température est portée à 95°C et le mélange réactionel est maintenu dans ces conditions pendant 48 heures.

### I-B) Synthèse et hydrolyse du copolymère comparatif (2):

### I-B-1. Synthèse du dibloc (2):

### Synthèse d'un copolymère statistique de styrène, d'acide méthacrylique et d'acrylate d'ethyle avec des rapports massiques: St/AMA/AEt = 75/2/23.

La polymérisation est réalisée en émulsion, dans un réacteur double enveloppe muni d'une agitation tri-pâle en inox. En pied de cuve, on introduit, à température ambiante, 840 g d'eau, 12,76 g de sulfate de dodécyle, sel du sodium (Aldrich), 0,28 g de carbonate de sodium Na₂CO₃. Le mélange obtenu est agité pendant 30 minutes (190 tr/min) sous azote. L'agitation continue pour une durée supplèmentaire de 55 minutes pendant laquelle la température est élevée à 75°C, puis on incorpore un mélange comprenant 5,93 g de styrène, et 8,24 g de alpha-(o-éthylxanthyl) propionate de méthyle (CH₃CHCO₂Me)SCSOEt, 0,16 g d'acide méthacrylique et 1,82 g d'acrylate d'ethyl. La température est ensuite élevée à 85°C et on ajoute 1,8992 g de persulfate d'ammonium (NH₄)₂S₂O₈.

Après cinq minutes, on continue à ajouter 53,46 g de styrène, 1,43 g d'acide méthacrylique et 16,41 g d'acrylate d'ethyl pendant une heure. Apres l'addition complète, on obtient un polymère en émulsion (latex), qui est maintenu à 85°C pendant une heure.

On prélève 314 g du copolymère en émulsion précédemment obtenu. On lui additionne à 85°C 0,60 g de persulfate d'ammonium (NH₄)₂S₂O₈ et 8 g d'eau. Apres cinq minutes, on commence l'addition d'un mélange composé de:
- 503,96 g d'acrylate d'éthyle (AEt),
- 10,28 g d'acide méthacrylique (AMA),
   Et simultanément un autre compose de:

- 320 g d'eau
- 0,57 g de Na₂CO₃

L'addition dure 1 heure. Le système est maintenu à cette température pendant trois heures supplémentaires.

### I-B-2) Hydrolyse du copolymère dibloc:

L'hydrolyse aussi est effectuée dans un réacteur double enveloppe muni d'une agitation tri-pâle en inox. On y introduit:
- 49,9 g du copolymère précédent (l'extrait sec à 39,66 %),
- 264,3 g d'eau (pour ajuster l'extrait sec à 4 %).

La température est portée à 85°C et cependant l'émulsion est agitée vigoureusement. Ensuite on y ajoute 185 g de soude 2N (correspondant à deux équivalents molaires de soude par rapport à l'acrylate d'éthyle) pendant deux heures. Après addition complète de la soude, la température est portée à 95°C et la réaction est maintenue dans ces conditions pendant 48 heures.

### I-C) Synthèse et hydrolyse du copolymère (3):

### 1.C.1) Synthèse du dibloc (3):

### Synthèse d'un copolymère statistique de styrène, d'acide méthacrylique et d'acrylate d'ethyle avec des rapports massiques: St/AMA/AEt = 55/2/43.

La polymérisation est réalisée en émulsion, dans un réacteur double enveloppe muni d'une agitation tri-pâle en inox. En pied de cuve, on introduit, à température ambiante, 572 g d'eau, 11,4 g de sulfate de dodécyle, sel du sodium (Aldrich), 0,25 g de carbonate de sodium Na₂CO₃. Le mélange obtenu est agité pendant 30 minutes (190 tr/min) sous azote. L'agiation continue pour une durée suplementaire de 55 minutes pendant laquelle la température est élevée à 75°C, puis on incorpore un mélange comprenant 3,54 g de styrène, et 7,36 g de alpha-(o-éthylxanthyl) propionate de méthyle (CH₃CHCO₂Me)SCSOEt, 0,14 g d'acide méthacrylique et 3,39 g d'acrylate d'ethyl. La température est ensuite élevée à 85°C et on ajoute 1,65 g de persulfate d'ammonium (NH₄)₂S₂O₈.

Après cinq minutes, on continue à ajouter 31,85 g de styrène, 1,27 g d'acide méthacrylique et 30,58 g d'acrylate d'ethyl pendant une heure. Apres l'addition complète, on obtient un polymère en émulsion (latex), qui est maintenu à 85°C pendant une heure.

On prélève153,10 g du copolymère en émulsion précédemment obtenu. On lui additionne à 85°C 0,62 g de persulfate d'ammonium (NH₄)₂S₂O₈ et 5,5 g d'eau. Apres cinq minutes, on commence l'addition d'un mélange composé de:
- 519,57 g d'acrylate d'éthyle (AEt),
- 10,60 g d'acide méthacrylique (AMA),
Et simultanement un autre compose de:
- 440 g d'eau
- 0,59 g de Na₂CO₃

L'addition dure 1 heure. Le système est maintenu à cette température pendant trois heures supplémentaires.

### I-C-2) Hydrolyse du copolymère dibloc:

L'hydrolyse aussi est effectuée dans un réacteur double enveloppe muni d'une agitation tri-pâle en inox. On y introduit:
- 50 g du copolymère précédent (l'extrait sec à 40,46 %),
- 269 g d'eau (pour ajuster l'extrait sec à 4 %).

La température est portée à 85°C et cependant l'émulsion est agitée vigoureusement. Ensuite on y ajoute 182 g de soude 2N (correspondant à deux équivalents molaires de soude par rapport à l'acrylate d'éthyle) pendant deux heures. Après addition complète de la soude, la température est portée à 95°C et la réaction est maintenue dans ces conditions pendant 48 heures.

### I-D) Synthèse et hydrolyse du copolymère (4):

### I-D-1) Synthèse du diloc (4):

### Synthèse d'un copolymère statistique de styrène, d'acide méthacrylique et d'acrylate d'ethyle avec des rapports massiques: St/AMA/AEt = 25/2/73.

La polymérisation est réalisée en émulsion, dans un réacteur double enveloppe muni d'une agitation tri-pâle en inox. En pied de cuve, on introduit, à température ambiante, 875 g d'eau, 13,9 g de sulfate de dodécyle, sel du sodium (Aldrich), 0,31 g de carbonate de sodium Na₂CO₃. Le mélange obtenu est agité pendant 30 minutes (190 tr/min) sous azote. L'agiation continue pour une durée suplementaire de 55 minutes pendant laquelle la température est élevée à 75°C, puis on incorpore un mélange comprenant 2,16 g de styrène, et 9,01 g de alpha-(o-éthylxanthyl) propionate de méthyle (CH₃CHCO₂Me)SCSOEt, 0,17 g d'acide méthacrylique et 6,32 g d'acrylate d'ethyl. La température est ensuite élevée à 85°C et on ajoute 1,58 g de persulfate d'ammonium (NH₄)₂S₂O₈.

Après cinq minutes, on continue à ajouter 19,49 g de styrène, 1,56 g d'acide méthacrylique et 56,91 g d'acrylate d'ethyl pendant une heure. Apres l'addition complète, on obtient un polymère en émulsion (latex), qui est maintenu à 85°C pendant une heure.

On prélève 197,29 g du copolymère en émulsion précédemment obtenu. On lui additionne à 85°C 0,79 g de persulfate d'ammonium (NH₄)₂S₂O₈ et 3,5g d'eau. Apres cinq minutes, on commence l'addition d'un mélange composé de:
- 661,27 g d'acrylate d'éthyle (AEt),
- 13,49 g d'acide méthacrylique (AMA),
   Et simultanément un autre composé de:

- 420 g d'eau
- 0,75 g de Na₂CO₃

L'addition dure 1 heure. Le système est maintenu à cette température pendant trois heures supplémentaires.

### I-D-2) Hydrolyse du copolymère dibloc:

L'hydrolyse aussi est effectuée dans un réacteur double enveloppe muni d'une agitation tri-pâle en inox. On y introduit:
- 54 g du copolymère précédent (l'extrait sec à 35,09 %),
- 250,8g d'eau (pour ajuster l'extrait sec à 4 %).

La température est portée à 85°C et cependant l'émulsion est agitée vigoureusement. Ensuite on y ajoute 182 g de soude 2N (correspondant à deux équivalents molaires de soude par rapport à l'acrylate d'éthyle) pendant deux heures. Après addition complète de la soude, la température est portée à 95°C et la réaction est maintenue dans ces conditions pendant 48 heures.

### 1-E) Synthèse et hydrolyse du copolymère (5)

### I-E-1) Synthèse d'un copolymère statistique de styrène, d'acide méthacrylique et d'acrylate d'ethyle avec des rapports massiques: St/AMA/AEt = 4,6/2,4/93.

La polymérisation est réalisée en émulsion, dans un réacteur double enveloppe muni d'une agitation tri-pâle en inox. En pied de cuve, on introduit, à température ambiante, 492 g d'eau, 4,79 g de sulfate de dodécyle, sel du sodium (Aldrich), 1,39 g de carbonate de sodium Na₂CO₃. Le mélange obtenu est agité pendant 30 minutes (190 tr/min) sous azote. L'agiation continue pour une durée suplementaire de 55 minutes pendant laquelle la température est élevée à 75°C, puis on incorpore un mélange comprenant 1,45 g de styrène, et 3,04 g de alpha-(o-éthylxanthyl) propionate de méthyle (CH₃CHCO₂Me)SCSOEt, 0,77 g d'acide méthacrylique et 29,67 g d'acrylate d'ethyl. La température est ensuite élevée à 85°C et on ajoute 1,27 g de persulfate d'ammonium (NH₄)₂S₂O₈.

Après cinq minutes, on continue à ajouter 13,10 g de styrène, 6,95 g d'acide méthacrylique et 267,30 g d'acrylate d'ethyl pendant une heure. Apres l'addition complète, on obtient un polymère en émulsion (latex), qui est maintenu à 85°C pendant une heure.

### I-E-2) Hydrolyse du copolymère:

L'hydrolyse du copolymère est aussi effectuée dans un réacteur double enveloppe muni d'une agitation tri-pâle en inox. On y introduit:
- 83 g du copolymère précédent (l'extrait sec à 36 %),
- 136g d'eau (pour ajuster l'extrait sec à 6 %).

La température est portée à 85°C et cependant l'émulsion est agitée vigoureusement. Ensuite on y ajoute 281 g de soude 2N (correspondant à deux équivalents molaires de soude par rapport à l'acrylate d'éthyle) pendant deux heures. Après addition complète de la soude, la température est portée à 95°C et la réaction est maintenue dans ces conditions pendant 48 heures.

Toutes les solutions de copolymères 1) à 5) sont ensuite dialysées pour éliminer l'exces de NaOH et le sodium sulfate de dodecyle. On effectue la dialyse conntre de l'eau déionizée en utilisant une membrane encellulose SPECTRA/POR® de limite en poids moléculaire de 3500 (cu-off) pendant plusieurs jours jusqu'à ce que la conductivité tombe à 20 µS/cm. La solution est ensuite filtrée et lyophilisée. La poudre obtenue est ensuite resolubilisée dans de l'eau deionizée.

Des mesures de diffusion de la lumière effectuées sur les solutions des copolymères 1 à 5 ainsi obtenues, démontrent que les copolymères 3, 4 et 5 sont solubles alors que les copolymères 1 et 2 peuvent etre considérés comme insoluble. On entend par soluble comme indiqué ci-dessus, le fait que chaque macromolécule est individuellement solubilisée sans aggrégation ou micellisation. Ce résultat est également comfirmé par des mesures de spectrofluorométrie et par microscopie électronique.

### II) Illustration des propriétés d'agent mouillant des copolymères (1) à (5) préparés ci-dessus :

Les surfaces traitées sont, dans une première série d'expériences, des éprouvettes en verre de silice méthylées par une réaction de silanation effectuée dans un four à 90°C au moyen de trichlorosilane pendant environ une heure. Les éprouvettes sont lavées et conservées dans l'alcool avant emploi. Les angles de goutte d'avancée et de reculée d'une goutte d'eau sont mesurés respectivement à des angles de 90° et 76°.

Selon une première méthode, les éprouvettes sont immergées dans les solutions de copolymères puis rincées abondamment à l'eau ou bien ces solutions sont pulvérisées sur les éprouvettes et séchées.

Les angles d'avancée et de reculée sont mesurés avec un autogoniomètre Ramé Hart. Pour mesurer l'angle d'avancée on place une seringue d'eau déionizée de telle sorte que la pointe de la seringue soit placée à 3 mm de la surface de l'éprouvette avant de faire tomber une goutte. L'angle est automatiquement mesuré par l'autogoniomètre Ramé Hart dans les 10 secondes. Quand deux mesures d'angle consécutives sont identiques, cette mesure est alors l'angle d'avancée. L'angle de reculée est mesuré en pompant des petites quantités de liquide formant la goutte dans la seringue et en mesurant les angles entre ces réductions de volume. On répète ces mesures jusqu'à obtenir deux mesures d'angle consécutives identiques, cette mesure est alors l'angle de reculée. Les solutions de copolymères testées contiennent ou ne contiennent pas du chlorure de sodium. Les résultats obtenus sont rassemblés dans le tableau 2 ci-dessous.

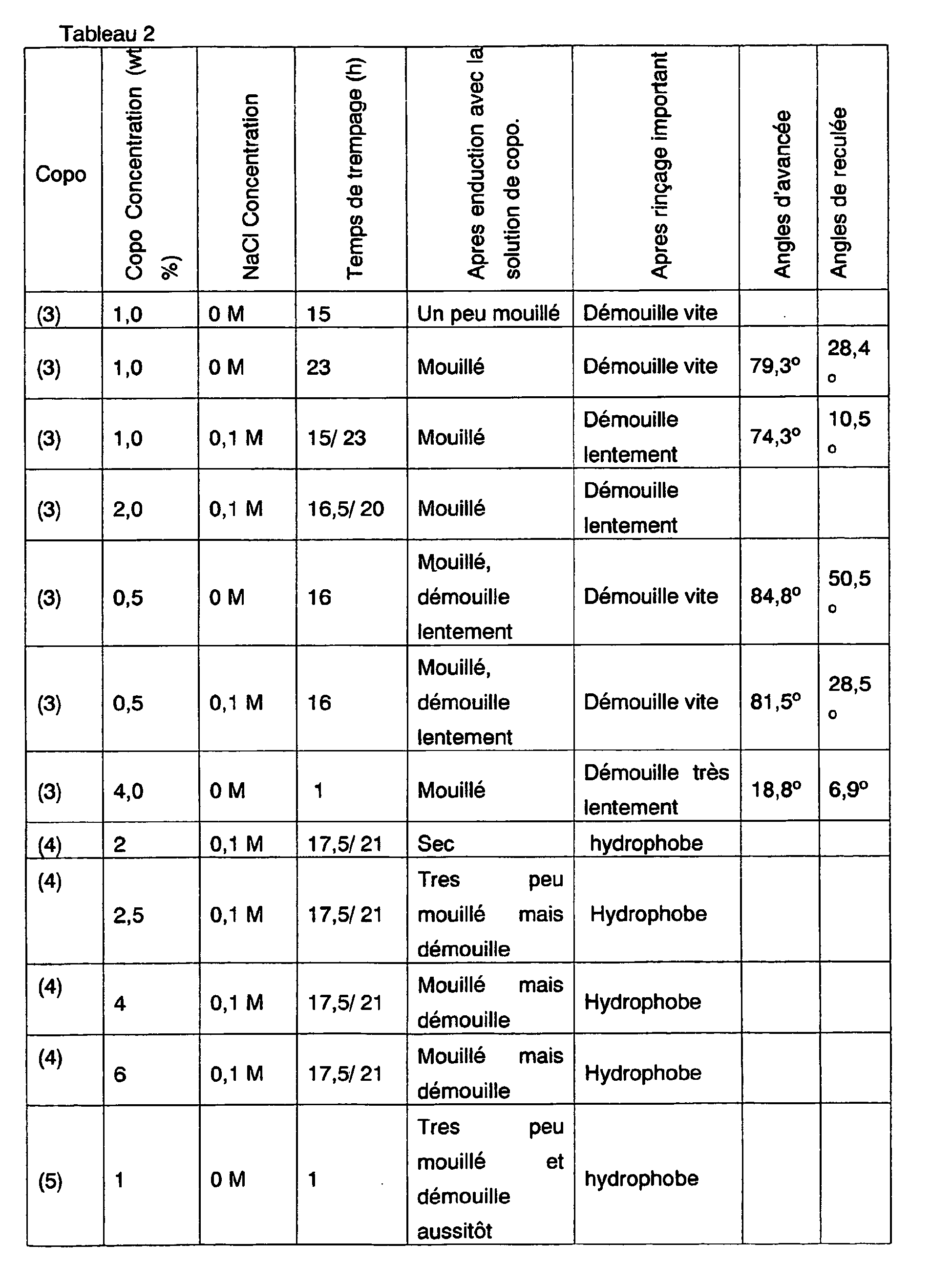

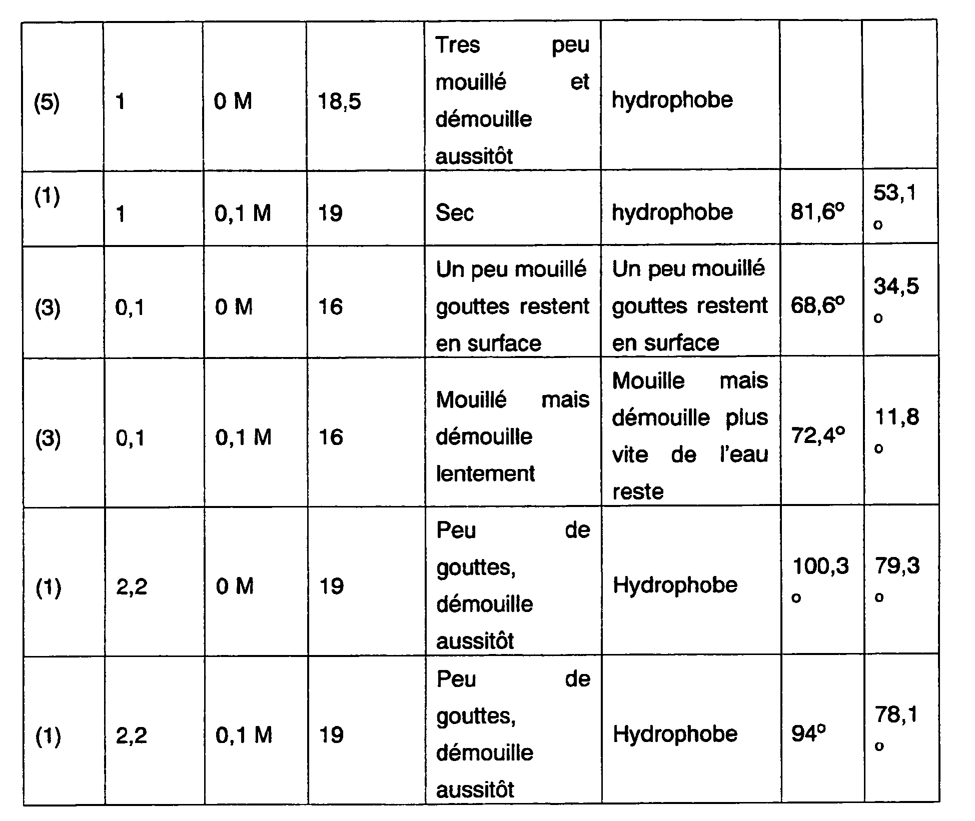

Du tableau 2, il apparait que les copolymères comparatifs (1) et (5) n'ont pratiquement pas la propriété d'agent mouillant alors que les copolymères (3) et (4) présentent cette propriété, le copolymère (3) donnant les meilleurs résultats surtout en présence de NaCl. De nouvelles mesures sont réalisées en utilisant le copolymère (3) en solution aqueuse à 0,58% en poids avec 0,1 M NaCl et divers support hydrophobes, à savoir, le verre méthylé, du polychlorure de vinyle (PVC), du polypropylène (PP), un plastique acrylique et une résine ABS.
Les résultats obtenus sont rassemblés dans le tableau 3 ci-dessous.

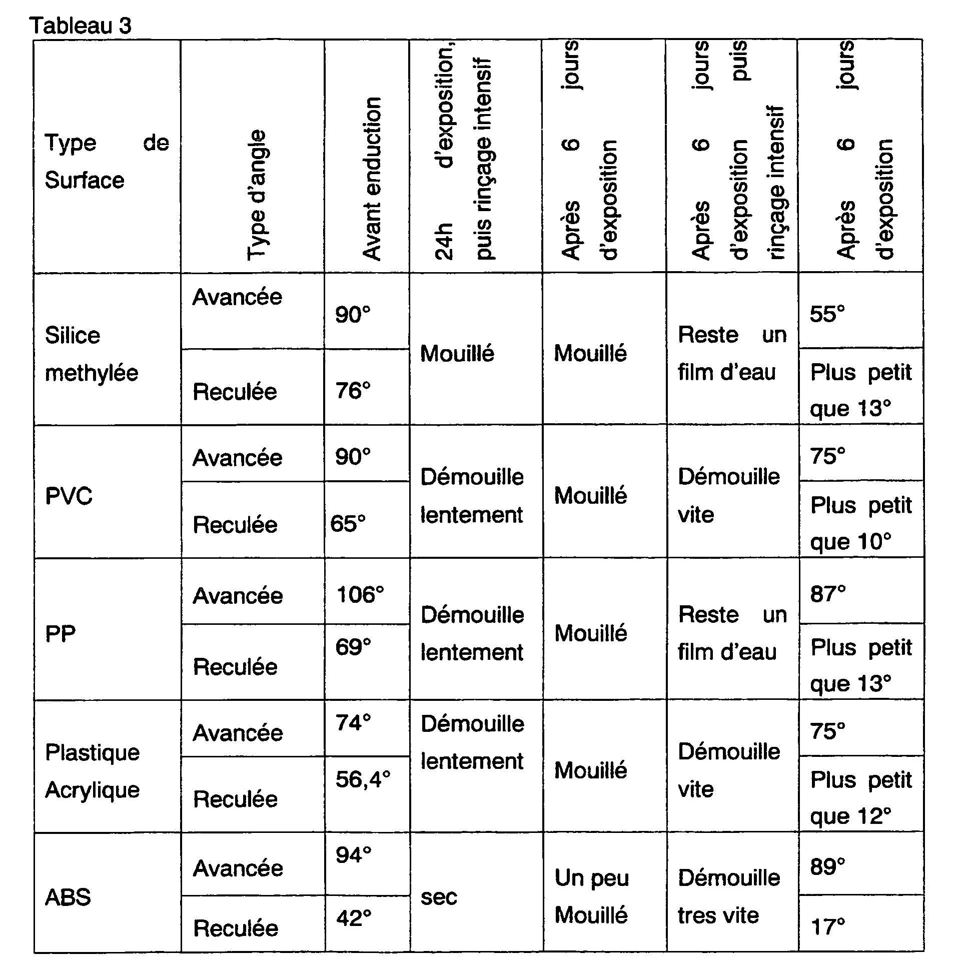

Du taleau 3, il apparait que les angles de reculée obtenus sont toujours inférieurs à 18°. De façon surprenante et inattendue, on obtient des résultats convenables avec le polypropylène, support connu pour être très difficilement mouilable.

### III) Illustration des propriétés en tant que primaire d'adhérence des copolymères (1) à (4) préparés ci-dessus:

Les copolymères (1) à (4) sont utilisés en l'état après dialyse et neutralisation a pH 9 ou non. Une solution à 0.1 % dans l'eau des polymères des exemples (1) a (4) est enduite sur différentes surfaces plastiques avec un tire film afin de déposer un film de 50 micromètres d'épaisseur. Ces surfaces sont en polyamide (PA), polycarbonate (PC), poléthylène téréphtalate (PETP), polyméthylméthacrylate (PMMA), PS (polystyrène) et polychlorure de vinyle (PVC).

Après séchage, un film de latex (latex commercial de Rhodia DS 1003) est enduit avec un tire-film afin de déposer un film de 1.5 mm d'épaisseur. Le film de latex est ensuite pelé avec un angle de 90° de la surface avec une machine de traction. La force de pelage est mesurée à une vitesse de traction constante de 300mm par minute. La force est exprimée en Newton par millimètre (force de pelage totale divisée par la largeur de la bande pelée).

Les résultats obtenus sont rassemblés dans le tableau 4 ci-dessous.

On peut observer du tableau 4 que l'adhésion à sec du film de latex est fortement augmentée sur toutes les surfaces plastiques préalablement enduites avec les solutions des copolyères des exemples (3) et (4) selon l'invention, comparativement à l'adhésion du film de latex témoin utilisé sans préenduction ou avec préenduction avec les solutions des copolyères des exemples comparatifs (1) et (2). Il est remarquable que le copolymère de l'exemple (4) donne des réusltats excellents sur tous les types de support (maximum de force), et que le copolymère de l'exemple 3 donne également de très bons résultats. Les copolymères des exemples comparatifs (1) et (2) donnent de mauvais résultats.

**Tableau 4**

| Copolymère | Témoin | Exemple 1 | Exemple 2 | Exemple 3 | Exemple 4 |
|---|---|---|---|---|---|
| Surfaces | | | | | |
| PA | 1,0 | 1,8 | 2,8 | 3 | 3,7 |
| PC | 0,8 | 2,0 | 1,2 | 3,6 | 3,4 |
| PETP | 0,9 | 2,1 | 1,2 | 1,5 | 3,7 |
| PMMA | 2,0 | 3,6 | 1,5 | 3,6 | 3,7 |
| PS | 1,5 | 3,8 | 1,8 | 4,1 | 3,5 |
| PVC | 1,6 | | | | 3,1 |

## Revendications

1. Copolymère à blocs hydrosoluble comprenant au moins un bloc de nature hydrophobe et au moins bloc de nature hydrophile, le bloc de nature hydrophobe présentant des motifs hydrophiles dans une quantité comprise entre 33 % et 99 % en poids par rapport au poids total des motifs du bloc hydrophobe.

2. Copolymère à blocs selon la revendication 1, **caractérisé en ce qu'**en solution dans l'eau, il se présente sous forme d'une solution aqueuse fluide et transparente jusqu'à une concentration d'environ 5% en poids.

3. Copolymère à blocs selon la revendication 1 ou 2, **caractérisé en ce que** le bloc hydrophobe présente des motifs hydrophiles dans une quantité comprise entre 33 % et 80 % en poids par rapport au poids total des motifs du bloc hydrophobe.

4. Copolymère à blocs selon l'une quelconque des revendications 1 à 3, **caractérisé en ce que** le bloc de nature hydrophile présente des motifs hydrophobes dans une quantité comprise entre 1 et 20 % en poids, par rapport au poids total des motifs du bloc hydrophile.

5. Copolymère à blocs selon l'une quelconque des revendications 1 à 3, **caractérisé en ce que** le bloc de nature hydrophile est un bloc totalement hydrophile.

6. Copolymère à blocs selon l'une quelconque des revendications 1 à 5, **caractérisé en ce qu'**au moins l'un desdits blocs est un copolymère issu de la copolymérisation de monomères hydrophiles et hydrophobes.

7. Copolymère à blocs selon la revendication 6, **caractérisé en ce que** les quantités de motifs hydrophiles et hydrophobes dans chacun desdits blocs sont contrôlées par les teneurs respectives en monomères hydrophiles et en monomères hydrophobes lors de la polymérisation des blocs.

8. Copolymère à blocs selon l'une quelconque des revendications 5 et 6, **caractérisé en ce qu'**au moins l'un desdits blocs est un copolymère issu:
- de la polymérisation de monomères pouvant être rendus hydrophiles par hydrolyse, de monomères hydrophobes non hydrolysables et de monomères hydrophiles,
- puis de l'hydrolyse du polymère obtenu.

9. Copolymère à blocs selon la revendication précédente, **caractérisé en ce que** les quantités de motifs hydrophiles et hydrophobes dans chacun desdits blocs sont contrôlées par la quantité de monomères pouvant être rendus hydrophiles par hydrolyse et par le taux d'hydrolyse.

10. Copolymère à blocs selon l'une quelconque des revendications 5 à 9, **caractérisé en ce que** les monomères hydrophobes sont choisis parmi:
- les monomères vinylaromatiques,
- les dioléfines,
- les acrylates et méthacrylates d'alkyle dont le groupe alkyle contient de 1 à 10 atomes de carbone.

11. Copolymère à blocs selon l'une quelconque des revendications 5 à 10, **caractérisé en ce que** les monomères hydrophiles sont choisis parmi:
- les acides carboxyliques à insaturation éthylénique,
- les monomères hydrophiles neutres choisis parmi l'acrylamide et ses dérivés (N-méthylacrylamide, N-isopropylacrylamide), le méthacrylamide, les macromonmères (méth)acrylate de polyéthylène glycol, (méth)acrylate d'alcool polyvinylique, (méth)acrylate de poly(hydroxy (C₁-C₄)-alkyl(méth)acrylate), (méth)acrylate de poly(N-méthylol acrylamide), et (méth)acrylate de poly((méth)acrylamide).
- les monomères hydrophiles anioniques tels que le 2-acrylamido-2-méthyl-propane sulfonate de sodium (AMPS), le styrène sulfonate de sodium, le vinylsulfonate de sodium.

12. Copolymère à blocs selon l'une quelconque des revendications 5 à 11, **caractérisé en ce que** les monomères pouvant être rendus hydrophiles par hydrolyse sont choisis parmi:
- les esters acryliques et méthacryliques hydrolysables en acide tels que l'acrylate de méthyle, l'acrylate d'éthyle, l'hydroxyéthyle acrylate, l'hydroxyéthyle méthacrylate, le tertiobutyle acrylate,
- l'acétate de vinyle hydrolysable en unités alcool vinylique,
- le méthacrylate et l'acrylate de 2-dimethylaminoéthyle quaternisé (madamquat et adamquat),
- l'acrylamide et le (méth)acrylamide.

13. Copolymère à blocs selon l'une quelconque des revendications précédentes, **caractérisé en ce que** les copolymères sont des copolymères diblocs.

14. Copolymère à blocs selon l'une quelconque des revendications 5 à 11, **caractérisé en qu'**il s'agit d'un copolymère dibloc dans lequel:
- le bloc de nature hydrophile comprenant des motifs acide acrylique (AA) et des motifs acrylate d'éthyle (AEt),
- et le bloc de nature hydrophobe comprenant des motifs de styrène (St) et d'acide méthacrylique (AMA) et/ou d'hydroxyéthylméthacrylate (HEA).

15. Copolymère à blocs selon la revendication précédente, **caractérisé en ce que** le bloc de nature hydrophile est issu:
- de la polymérisation d'acide acrylique (AA) et d'acrylate d'éthyle (AEth) dans un rapport en poids AEt/AA de 98/2,
- puis de l'hydrolyse du polymère obtenu à un taux d'au moins 33 % en mole.

16. Copolymère à blocs selon la revendication 14 ou 15, **caractérisé en ce que** le bloc de nature hydrophobe est issu de la polymérisation d'un mélange de monomères comprenant au moins 33 % en poids de styrène.

17. Copolymère à blocs selon l'une quelconque des revendications précédentes, **caractérisé en ce qu'**il présente une masse moléculaire en nombre d'au plus 100 000 g/mol.

18. Copolymères à blocs selon l'une des revendications 1 à 17, **caractérisé en ce qu'**ils sont préparés par un procédé de polymérisation dit vivant ou contrôlé.

19. Procédé de préparation de copolymères à blocs tels que définis à la revendication 18, **caractérisé en ce que**:
a) on met en contact:
- au moins un monomère éthyléniquement insaturé,
- au moins une source de radicaux libres, et
- au moins un composé de formule (I): 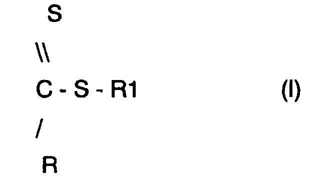
dans laquelle:
. R représente un groupe R2O-, R2R'2N- ou R3- où :
R2 et R'2, identiques ou différents, représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
. R3 représente H, Cl, un groupe alkyle, aryle, alcène ou alcyne, un cycle saturé ou non, un hétérocycle, saturé ou non, un groupe alkylthio, alkoxycarbonyle, aryloxycarbonyle, carboxy, acyloxy, carbamoyles, cyano, dialkyl- ou diaryl-phosphonato, dialkyl- ou diarylphosphinato, une chaîne polymère,
. R1 représente un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
b) on répète au moins une fois la mise en contact précédente en utilisant:
- des monomères différents de la mise en oeuvre précédente, et
- à la place du composé précurseur de formule (I), le polymère issu de la mise en oeuvre précédente, et
c) éventuellement, hydrolyser le copolymère obtenu.

20. Procédé selon la revendication 19, carctérisé en ce que le composé de formule (I) est un dithiocarbonate choisi parmi les composés de formules (IA), (IB) et (IC) suivantes: 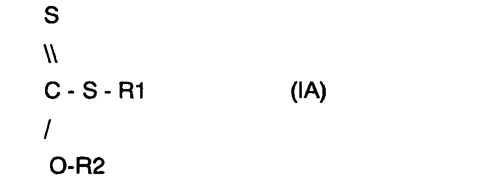 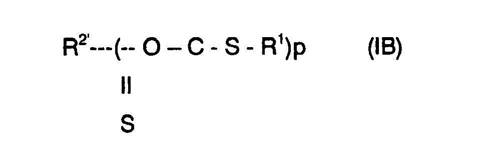 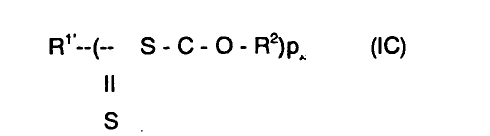 dans lesquelles:
. R2 et R2' représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
. R1 et R1' représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
. p est compris entre 2 et 10.

21. Procédé de contrôle de la balance hydrophile/hydrophobe de copolymères à blocs tels que définis à la revendication 1 et présentant au moins un bloc issu de la polymérisation de monomères hydrophiles et au moins un bloc issu de la polymérisation de monomères hydrophobes, **caractérisé en ce qu'**on introduit :
- des motifs hydrophiles dans le bloc issu de la polymérisation de monomères hydrophobes, et/ou
- des motifs hydrophobes dans le bloc issu de la polymérisation de monomères hydrophiles.

22. Utilisation des copolymères à blocs selon l'une quelconque des revendications 1 à 17 en tant que promoteur d'adhérence ou agent mouillant.

23. Utilisation selon la revendication 22 en tant que promoteur d'adhérence pour peinture devant être déposée sur un support en matière plastique suivant une quantité de 0,1 à 10 %, de préférence de 0,5 à 5 % en poids par rapport au poids total de la peinture.

24. Utilisation selon la revendication 22 en tant qu'agent mouillant en solution aqueuse suivant une quantité de 0,01 à 3 %, de préférence de 0,1 à 1% en poids par rapport au poids total de ladite solution.

## Claims

1. A water-soluble block copolymer comprising at least one block of hydrophobic nature and at least one block of hydrophilic nature, the block of hydrophobic nature exhibiting hydrophilic units in an amount of between 33% and 99% by weight with respect to the total weight of the units of the hydrophobic block.

2. A block copolymer according to claim 1, wherein, in solution in water, said copolymer is in the form of a fluid and transparent aqueous solution up to a concentration of about 5% by weight.

3. A block copolymer according to claim 1 or 2, wherein the hydrophobic block exhibits hydrophilic units in an amount of between 33% and 80% by weight with respect to the total weight of the units of the hydrophobic block.

4. A block copolymer according to any of claims 1 to 3, wherein the block of hydrophilic nature exhibits hydrophobic units in an amount of between 1 and 20% by weight with respect to the total weight of the units of the hydrophilic block.

5. A block copolymer according to any of claims 1 to 3, wherein the block of hydrophilic nature is an entirely hydrophilic block.

6. A block copolymer according to any of claim claim 1 to 5, wherein at least one of said blocks is a copolymer resulting from the copolymerization of hydrophilic and hydrophobic monomers.

7. A block copolymer according to claim 6, wherein the amounts of hydrophilic and hydrophobic units in each of said blocks are controlled by the respective contents of hydrophilic monomers and of hydrophobic monomers during the polymerization of the blocks.

8. A block copolymer according to any of claims 5 or 6, wherein at least one of said blocks is a copolymer resulting:
- from the polymerization of monomers which can be rendered hydrophilic by hydrolysis, of non-hydrolysable hydrophobic monomers and of hydrophilic monomers,
- and then from the hydrolysis of the polymer obtained.

9. A block copolymer according to the preceding claim, wherein the amounts of hydrophilic and hydrophobic units in each of said blocks are controlled by the amount of monomers which can be rendered hydrophilic by hydrolysis and by the degree of hydrolysis.

10. A block copolymer according to any of claims 5 to 9, wherein the hydrophobic monomers are:
- vinylaromatic monomers,
- diolefins,
- alkyl acrylates or alkyl methacrylates, whose alkyl group comprises from 1 to 10 carbon atoms.

11. A block copolymer according to any of claims 5 to 10, wherein the hydrophilic monomers are chosen from:
- carboxylic acids comprising ethylenic unsaturation,- neutral hydrophilic monomers chosen from acrylamide and its derivatives (N-methylacrylamide, N-isopropylacrylamide), methacrylamide, poly(ethylene glycol) (meth)acrylate, poly(vinyl alcohol) (meth)acrylate, poly(hydroxy(C₁-C₄)alkyl (meth)acrylate) (meth)acrylate, poly(N-methylolacrylamide) (meth)acrylate, poly((meth)acrylainide) (meth)acrylate macromonomers,
- anionic hydrophilic monomers such as sodium 2-acrylamido-2-methylpropanesulphonate (AMPS), sodium styrenesulphonate or sodium vinylsulphonate.

12. A block copolymer according to any of claims 5 to 11, wherein monomers which can be rendered hydrophilic by hydrolysis and which are chosen from:
- acrylic and methacrylic esters that can be hydrolyzed in acid, such as methyl acrylate, ethyl acrylate, hydroxyethyl acrylate, hydroxyethyl methacrylate, tert-butyl acrylate,
- vinyl acetate that can be hydrolized in vinyl alcohol units,
- methacrylate and acrylate of quaternized 2-dimethylaminoethyl (madamquat and adamquat),
- acrylamide or (meth)acrylamide.

13. A block copolymer according to any of the preceding claims, wherein the copolymer is a diblock copolymer.

14. A block copolymer according to any of claims claim 5 to 11, wherein it is a diblock copolymer having:
- the block of hydrophilic nature comprises acrylic acid (AA) units and ethyl acrylate (EtA) units,
- and the block of hydrophobic nature comprises styrene (St) and methacrylic acid (MAA) or hydroxyethyl methacrylate (HEMA) units.

15. A block copolymer according to any of the preceding claims, wherein the block of hydrophilic nature results:
- from the polymerization of acrylic acid (AA) and of ethyl acrylate (EtA) in an EtA/AA ratio by weight of 98/2,
- and then from the hydrolysis of the polymer obtained to a degree of at least 33 mol%.

16. A block copolymer according to claim 14 or 15, wherein the block of hydrophobic nature results from the polymerization of a mixture of monomers comprising at least 33% by weight of styrene.

17. A block copolymer according to any of the preceding claims, having a number-average molecular mass of at most 100,000 g/mol.

18. A block copolymers according to any of claims 1 to 17, made by a living or controlled polymerization process.

19. A process for the preparation of a block copolymer as defined in claim 18, wherein:
a) placing into contact:
- at least one ethylenically unsaturated monomer,
- at least one source of free radicals, and
- at least one compound of formula (I): 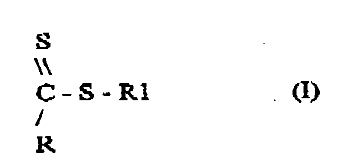
wherein:
. **R** represents an R²O-, R²R'²N- or R³- group, where:
**R²** and **R'²,** which are identical or different, represent (i) an alkyl, acyl, aryl, alkene or alkyne group or (ii) a saturated or unsaturated, possibly aromatic, carbocycle or (iii) a saturated or unsaturated heterocycle, these groups and rings (i), (ii) and (iii) possibly being substituted,
. R³ represents H, Cl, an alkyl, aryl, alkene or alkyne group, a saturated or unsaturated ring, a saturated or unsaturated heterocycle, an alkylthio, alkoxycarbonyl, aryloxycarbonyl, carboxy, acyloxy, carbamoyl, cyano, dialkylphosphonato, diarylphosphonato, dialkylphosphinato or diarylphosphinato group, or a polymer chain,
. **R¹** represents (i) an optionally substituted alkyl, acyl, aryl, alkene or alkyne group or (ii) an optionally substituted or aromatic, saturated or unsaturated, carbocycle or (iii) an optionally substituted, saturated or unsaturated, heterocycle, or a polymer chain; to obtain a polymer
b) repeating above step a) at least once, using:
- monomers differing from those used in step a), and
- in lieu of the precursor compound of formula (I), the polymer obtained in the previous step b);
c) optionally, hydrolysing the copolymer obtained.

20. A process according to claim 19, wherein the compound of formula (I) is a dithiocarbonate chosen from the compounds of the following formulae (TA), (IB) and (IC): 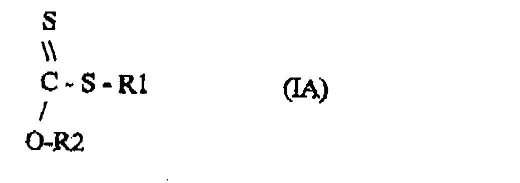 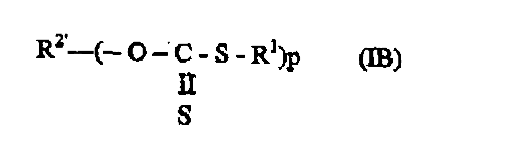 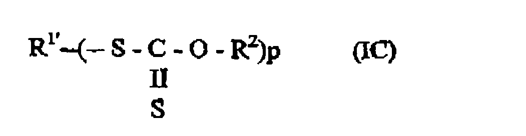 wherein:
**R²** and **R^{2'}** represent (i) an alkyl, acyl, aryl, alkene or alkyne group, or (ii) an optionally aromatic, saturated or unsaturated, carbocycle or (iii) a saturated or unsaturated heterocycle, these groups and rings (i), (ii) and (iii) possibly being substituted;
. **R¹** and **R^{1'}** represent (i) an optionally substituted alkyl, acyl, aryl, alkene or alkyne group or (ii) an optionally substituted or aromatic, saturated or unsaturated, carbocycle or (iii) an optionally substituted, saturated or unsaturated, heterocycle, or a polymer chain;
. **p** is between 2 and 10.

21. A process for controlling the hydrophilic-lipophilic balance of block copolymers as defined in claim 1, having at least one block coming from the polymerization of hydrophilic monomers and at least one block coming from the polymerization of hydrophobic monomers, wherein:
- hydrophilic units are introduced into the block coming from the polymerization of hydrophobic monomers, and/or
- hydrophobic units are introduced into the block coming from the polymerization of hydrophilic monomers.

22. Use of the block copolymers according to any of claims 1 to 17, as adhesion promoter or wetting agent.

23. Use according to claim 22 as an adhesion promoter for a paint that is to be deposited on a plastic support according to an amount of 0.1 to 10%, preferably of 0.5 to 5%, by weight with respect to the total weight of the paint.

24. Use according to claim 22 as a wetting agent in aqueous solution according to an amount of 0.01 to 3%, preferably of 0.1 to 1%, by weight with respect to the total weight of said solution.

## Patentansprüche

1. Wasserlösliches Blockcopolymer, das mindestens einen Block hydrophober Natur und mindestens einen Block hydrophiler Natur umfasst, in dem der Block hydrophober Natur hydrophile Motive in einer Menge zwischen 33 Gew.-% und 99 Gew.-%, bezogen auf das Gesamtgewicht der Motive des hydrophoben Blocks, aufweist.

2. Blockcopolymer gemäß Anspruch 1, **dadurch gekennzeichnet, dass** es in einer Lösung in Wasser bis zu einer Konzentration von ungefähr 5 Gew.-% in Form einer fluiden und transparenten wässrigen Lösung vorliegt.

3. Blockcopolymer gemäß Anspruch 1 oder 2, **dadurch gekennzeichnet, dass** der hydrophobe Block hydrophile Motive in einer Menge zwischen 33 Gew.-% und 80 Gew.-%, bezogen auf das Gesamtgewicht der Motive des hydrophoben Blocks, aufweist.

4. Blockcopolymer gemäß einem der Ansprüche 1 bis 3, **dadurch gekennzeichnet, dass** der Block hydrophiler Natur hydrophobe Motive in einer Menge zwischen 1 und 20 Gew.-%, bezogen auf das Gesamtgewicht der Motive des hydrophilen Blocks, aufweist.

5. Blockcopolymer gemäß einem der Ansprüche 1 bis 3, **dadurch gekennzeichnet, dass** der Block hydrophiler Natur ein völlig hydrophiler Block ist.

6. Blockcopolymer gemäß einem der Ansprüche 1 bis 5, **dadurch gekennzeichnet, dass** mindestens einer dieser Blöcke ein Copolymer ist, das aus der Copolymerisation von hydrophilen und hydrophoben Monomeren hervorgegangen ist.

7. Blockcopolymer gemäß Anspruch 6, **dadurch gekennzeichnet, dass** die Mengen an hydrophilen und hydrophoben Motiven in jedem dieser Blöcke durch den jeweiligen Gehalt an hydrophilen Monomeren und hydrophoben Monomeren bei der Polymerisation der Blöcke reguliert wird.

8. Blockcopolymer gemäß einem der Ansprüche 5 und 6, **dadurch gekennzeichnet, dass** mindestens einer dieser Blöcke ein Copolymer ist, das hervorgegangen ist aus:
- der Polymerisation von Monomeren, die durch Hydrolyse hydrophil werden können, von nicht-hydrolisierbaren hydrophoben Monomeren und von hydrophilen Monomeren,
- anschließender Hydrolyse des erhaltenen Polymers.

9. Blockcopolymer gemäß dem vorangehenden Anspruch, **dadurch gekennzeichnet, dass** die Mengen an hydrophilen und hydrophoben Motiven in jedem dieser Blöcke durch die Menge an Monomeren, die durch Hydrolyse hydrophil werden können, und den Hydrolysegrad reguliert werden.

10. Blockcopolymer gemäß einem der Ansprüche 5 bis 9, **dadurch gekennzeichnet, dass** die hydrophoben Monomere ausgewählt sind aus:
- aromatischen Vinylmonomeren,
- Diolefinen,
- Alkylacrylaten und -methacrylaten, deren Alkylgruppe 1 bis 10 Kohlenstoffatome enthält.

11. Blockcopolymer gemäß einem der Ansprüche 5 bis 10, **dadurch gekennzeichnet, dass** die hydrophilen Monomere ausgewählt sind aus:
- Carbonsäuren mit ethylenisch ungesättigter Bindung;
- neutralen hydrophilen Monomeren, die ausgewählt sind aus Acrylamid und seinen Derivaten (N-Methylacrylamid, N-Isopropylacrylamid), Methacrylamid, den Makromonomeren Polyethylenglykol-(meth)acrylat, Polyvinylalkohol-(meth)acrylat, Poly(hydroxy-(C₁-C₄)-alkyl(meth)acrylat)-(meth)acrylat, Poly(N-methylolacrylamid)-(meth)acrylat und Poly((meth)acrylamid)-(meth)acrylat,
- anionischen hydrophilen Monomeren, wie etwa Natrium-2-acrylamid-2-methylpropansulfonat (AMPS), Natriumstyrolsulfonat, Natriumvinylsulfonat.

12. Blockcopolymer gemäß einem der Ansprüche 5 bis 11, **dadurch gekennzeichnet, dass** die Monomere, die durch Hydrolyse hydrophil werden können, ausgewählt sind aus:
- zur Säure hydrolisierbaren Acryl- und Methacrylestern, wie etwa Methylacrylat, Ethylacrylat, Hydroxyethylacrylat, Hydroxyethylmethacrylat, tert-Butylacrylat,
- in Vinylalkohol-Einheiten hydrolysierbares Vinylacetat,
- quartäres 2-Dimethylaminoethyl-methacrylat und -acrylat (Madamquat und Adamquat),
- Acrylamid und Methacrylamid.

13. Blockcopolymer gemäß einem der vorangehenden Ansprüche, **dadurch gekennzeichnet, dass** die Copolymere Zweiblockcopolymere sind.

14. Blockcopolymer gemäß einem der Ansprüche 5 bis 11, **dadurch gekennzeichnet, dass** es sich um ein Zweiblockcopolymer handelt, in dem:
- der Block hydrophiler Natur Acrylsäure-Motive (AA) und Ethylacrylat-Motive (AEt) umfasst, und
- der Block hydrophober Natur Styrol- (St) und Methacrylsäure- (AMA) und/oder Hydroxyethylmethacrylat-Motive (HEA) umfasst.

15. Blockcopolymer gemäß dem vorangehenden Anspruch, **dadurch gekennzeichnet, dass** der Block hydrophiler Natur hervorgegangen ist aus:
- der Polymerisation von Acrylsäure (AA) und Ethylacrylat (AEt) in einem Gewichtsverhältnis AEt/AA von 98/2,
- anschließender Hydrolyse des erhaltenen Polymers mit einem Grad von mindestens 33 Mol-%.

16. Blockcopolymer gemäß Anspruch 14 oder 15, **dadurch gekennzeichnet, dass** der Block hydrophober Natur aus der Polymerisation eines Gemisches von Monomeren hervorgegangen ist, das mindestens 33 Gew.-% Styrol umfasst.

17. Blockcopolymer gemäß einem der vorangehenden Ansprüche, **dadurch gekennzeichnet, dass** es ein Zahlenmittel der Molmasse von höchstens 100.000 g/mol aufweist.

18. Blockcopolymere gemäß einem der Ansprüche 1 bis 17, **dadurch gekennzeichnet, dass** sie durch ein als lebend oder kontrolliert bezeichnetes Polymerisationsverfahren hergestellt wurden.

19. Herstellungsverfahren von Blockcopolymeren, wie sie in Anspruch 18 definiert sind, **dadurch gekennzeichnet, dass**:
a) in Kontakt gebracht werden:
- mindestens ein ethylenisch ungesättigtes Monomer,
- mindestens eine Quelle freier Radikale, und
- mindestens eine Verbindung der Formel (I): 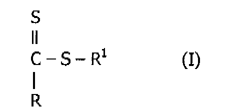 in der:
• R eine Gruppe R²O-, R²R^{'2}N- oder R³- darstellt, wobei:
R² und R^{'2} gleich oder verschieden voneinander (i) eine Alkyl-, Acyl-, Aryl-, Alken- oder Alkingruppe oder (ii) einen gesättigten oder ungesättigten, gegebenenfalls aromatischen Kohlenstoffring oder (iii) einen gesättigten oder ungesättigten Heterocyclus darstellt, wobei diese Gruppen und Ringe (i), (ii) und (iii) substituiert sein können,
• R³ H, Cl, eine Alkyl-, Aryl-, Alken- oder Alkingruppe, einen gesättigten oder ungesättigten Ring, einen gesättigten oder ungesättigten Heterocyclus, eine Alkylthio-, Alkoxycarbonyl-, Aryloxycarbonyl-, Carboxy-, Acyloxy-, Carbamoyl-, Cyano-, Dialkyl- oder Diaryl-phosphonat-, Dialkyl- oder Diaryl-phosphinat-Gruppe, eine Polymerkette darstellt,
• R¹ (i) eine Alkyl-, Acyl-, Aryl-, Alken- oder Alkingruppe, die gegebenenfalls substituiert ist, oder (ii) einen gesättigten oder ungesättigten, gegebenenfalls substituierten oder aromatischen Kohlenstoffring oder (iii) einen gesättigten oder ungesättigten, gegebenenfalls substituierten Heterocyclus, eine Polymerkette darstellt,
b) das vorherige Inkontaktbringen mindestens einmal wiederholt wird unter Verwendung von:
- Monomeren, die verschieden von jenen der vorherigen Durchführung sind, und
- anstelle der Ausgangsverbindung der Formel (I) das Polymer, das aus der vorherigen Durchführung hervorgegangen ist, und
c) gegebenenfalls das erhaltene Copolymer hydrolysiert wird.

20. Verfahren gemäß Anspruch 19, **dadurch gekennzeichnet, dass** die Verbindung der Formel (I) ein Dithiocarbonat ist, das ausgewählt ist aus den Verbindungen der folgenden Formeln (IA), (IB) und (IC): 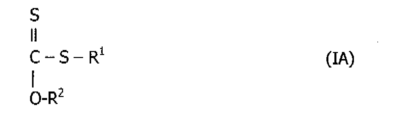 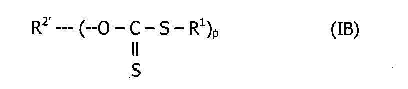 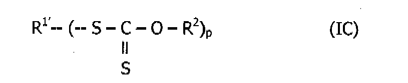 in denen:
• R² und R^{2'} (i) eine Alkyl-, Acyl-, Aryl-, Alken- oder Alkingruppe oder (ii) einen gesättigten oder ungesättigten, gegebenenfalls aromatischen Kohlenstoffring oder (iii) einen gesättigten oder ungesättigten Heterocyclus darstellen, wobei diese Gruppen und Ringe (i), (ii) und (iii) substituiert sein können,
• R¹ und R^{1'} (i) eine Alkyl-, Acyl-, Aryl-, Alken- oder Alkingruppe, die gegebenenfalls substituiert sind, oder (ii) einen gesättigten oder ungesättigten, gegebenenfalls substituierten oder aromatischen Kohlenstoffring oder (iii) einen gesättigten oder ungesättigten, gegebenenfalls substituierten Heterocyclus, eine Polymerkette darstellen,
• p zwischen 2 und 10 liegt.

21. Verfahren der Regulation des Gleichgewichts hydrophil/hydrophob der Blockcopolymere, wie sie in Anspruch 1 definiert sind, und die mindestens einen Block, der aus der Polymerisation von hydrophilen Monomeren hervorgegangen ist, und mindestens einen Block, der aus der Polymerisation von hydrophoben Monomeren hervorgegangen ist, aufweisen, **dadurch gekennzeichnet, dass** eingefügt werden:
- hydrophile Motive in den Block, der aus der Polymerisation von hydrophoben Monomeren hervorgegangen ist, und/oder
- hydrophobe Motive in den Block, der aus der Polymerisation von hydrophilen Monomeren hervorgegangen ist.

22. Verwendung der Blockcopolymere gemäß einem der Ansprüche 1 bis 17 als Adhäsionsförderer oder Netzmittel.

23. Verwendung gemäß Anspruch 22 als Adhäsionsförderer für einen Anstrich, bevor dieser auf eine Unterlage aus Kunststoff aufgetragen wird, in einer Menge von 0,1 bis 10 Gew.-%, vorzugsweise 0,5 bis 5 Gew.-%, bezogen auf das Gesamtgewicht des Anstrichs.

24. Verwendung gemäß Anspruch 22 als Netzmittel in wässriger Lösung in einer Menge von 0,01 bis 3 Gew.-%, vorzugsweise 0,1 bis 1 Gew.-%, bezogen auf das Gesamtgewicht dieser Lösung.
